**Europäisches Patentamt**

**European Patent Office**

**Office européen des brevets**

(19)

(11) **EP 1 522 840 A1**

(12) **EUROPEAN PATENT APPLICATION**

(43) Date of publication:
**13.04.2005 Bulletin 2005/15**

(51) Int Cl.⁷: **G01M 11/00**, H01S 3/30,
H04B 10/08

(21) Application number: **03292825.1**

(22) Date of filing: **13.11.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Martinelli, Catherine**<br>  **91120 Palaiseau (FR)**<br>• **Charlet, Gabriel**<br>  **91190 Villiers-Le-Bacle (FR)** |
| (71) Applicant: **ALCATEL**<br>**75008 Paris (FR)** | (74) Representative: **Rausch, Gabriele, Dr. et al**<br>**Alcatel**<br>**Intellectual Property Department, Stuttgart**<br>**70430 Stuttgart (DE)** |

(54) **Method and apparatus for determining the gain characteristic of a distributed raman amplifier**

(57)    A method of determining the gain characteristic of a Roman amplifier includes the steps of launching a pump light signal into a fiber (F); preliminary adjusting the power of the pump light signal to a value that lies in a range where the amplified spontaneous emission noise originating from the pump light signal is substantially proportional to the on/off gain provided by the power of the pump light signal; monitoring the power of the amplified spontaneous emission noise signal; varying the power of the pump light signal; measuring a variation in the power of the amplified spontaneous emission noise signal corresponding to the pump power variation; and determining the gain characteristic of the amplifier from the relative variation in pump power and the measured variation in noise power.

*Fig. 1*

# Description

## Field of the Invention

The invention relates to the field of optical fiber communication systems and more particularly to a method and apparatus for determining gain characteristic of a distributed Roman amplifier.

## Background of the Invention

In optical fiber communication systems, optical signals propagating along an optical fiber undergo signal attenuation due to absorption and scattering in optical fibers. Therefore, optical signals require periodic amplification over long distances, which can be performed either by electrical repeaters or by optical amplifiers. Known optical amplifier types include Erbium-doped fiber amplifiers (EDFAs), semiconductor optical amplifiers and Raman amplifiers. Due to its flat gain over a wide signal wavelength band, the Raman amplifier has gained increasing attention in the recent past as ideal amplifier candidate for wavelength division multiplex (WDM) signal transmission.

The Raman amplification process is based on the Raman effect, which is a non-linear optical process that occurs only at high optical intensities and involves coupling of light propagating through the non-linear medium to vibrational modes of the medium, and re-radiation of the light at a different wavelength. Re-radiated light upshifted in wavelength is commonly referred to as a Stokes line, whereas light downshifted in wavelength is referred to as an Anti-Stokes line. The Raman effect is described by quantum mechanics as scattering of photons at molecules which thereby undergo a transition of their vibrational state. Raman amplification involves stimulated Raman scattering, where the incident beam, having a higher optical frequency, often referred to as the pump beam, is used to amplify the lower frequency beam often referred to as the Stokes beam or the signal beam through the Raman effect.

In contrast to EDFAs, where the amplification properties are dependent only on the EDFA module, the transmission line itself is used as the gain medium of a distributed Raman amplifier and thus, amplification properties such as gain and gain equalization are closely related to the type, properties and characteristics of the fiber used and the fiber condition. In a silica fiber for example, the strongest Raman scattering, i.e. the maximum Raman gain occurs at a frequency shift of about 13.2 THz, which corresponds to a wavelength shift of about 50 - 100 nm for pump wavelengths between about 1 and 1.5 $\mu$m. It is impossible to accurately predict the performance of a Raman amplifier, including gain, gain equalization and noise spectrum, without thorough knowledge of the fiber types, properties characteristics, and condition along the fiber optic transmission line.

Distributed Raman amplification is typically characterized by the on-off gain, i.e., the ratio of the signal power measured at the output end of the fiber when the pumps are on relative to the signal power when the pumps are off. In order to operate a particular Raman amplifier, the gain characteristic of the corresponding fiber link must be known to allow proper adjustment of the pump power. It would be possible to do a preliminary calibration of the Raman efficiency of various fiber types versus the pump power in the laboratory and to use these values for actual installations in the field. But in fact, the Raman gain strongly depends on the loss of the fiber at the pump wavelength and the actual attenuation characteristic of an installed fiber link is not known in advance but must be determined in the field. In addition, local losses due to for example fiber splices cannot be predicted accurately and the installed fiber may not have exactly the same Raman efficiency as the fiber of that type that had been preliminary calibrated in the laboratory. Methods that trust in nominal fiber characteristics only, can therefore achieve an accuracy not better than about +/-20%. It is therefore necessary to determine the Raman characteristics of an actual transmission line in the field. A measurement of the Raman on/off gain in the field is, however, difficult because it may on the one hand not be possible at system installation to dispose a signal source for the measurement and on the one hand, the two fiber ends where the measurement has to be performed are typically 50 to 100 km apart.

It is thus an object of the present invention to provide a method and related apparatus for determining the gain characteristic of a distributed Roman amplifier at system installation, which can be performed from one side of an already installed fiber link.

## Summary of the Invention

These and other objects that appear below are achieved by launching a pump power into an installed fiber link and measuring backward amplified spontaneous emission (ASE) noise. The pump power is adjusted to a regime where the power of the ASE noise is substantially proportional to the on/off gain delivered by the pump. The pump power is then varied and the on/off gain deduced from an observed variation in the ASE power.

In particular, the method includes the steps of launching a pump light signal into the fiber; preliminary adjusting the power of the pump light signal to a value that lies in a range where the amplified spontaneous emission noise (linear scale)originating from the pump light signal is substantially proportional to the on/off gain (linear scale) delivered by the pump; monitoring the power of the amplified spontaneous noise signal; varying the power of the pump light signal; measuring a variation in the power of the amplified spontaneous noise signal corresponding to the pump power variation; and determining the gain characteristic of the amplifier from the relative variation in pump power and the measured variation in noise power.

The invention thus provides a very accurate and simple method to determine the Raman gain characteristics in the field without requiring special signal sources and other dedicated measurement equipment.

## Brief Description of the Drawings

Preferred embodiments of the present invention will now be described with reference to the accompanying drawings in which

figure 1      shows a Raman amplifier and
figures 2a-2d  show in four diagrams the ASE noise figure as a function of the Raman gain for different fiber types.

## Detailed Description of the Invention

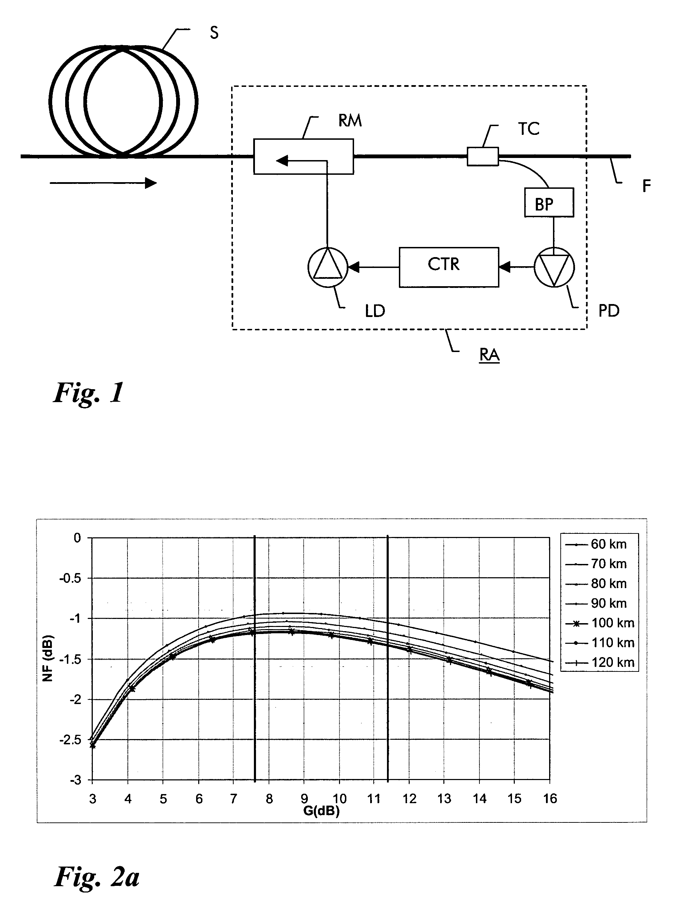

A Raman amplifier which is to be characterized by the measurement according to the invention is shown in figure 1. The Raman amplifier RA uses as gain medium a preceding fiber link F, the Raman gain characteristics of which need to be determined. The Raman amplifier RA as such contains a pump source LD and a Raman multiplexer RM which couples the pump light from the pump source LD in backwards direction into the fiber link F. The pump light causes stimulated Raman scattering in the fiber span length S when a signal traverses the link and thus amplifies the signal. A tap coupler TC is provided at the output of the Raman amplifier which serves to extract a small fraction of the amplified signal light from the fiber and feed it via a bandpass filter BP to a photodiode PD which determines an output power value of the signal.

In operation, the pump light power must be adjusted to the required Raman gain. Such adjustment, however, requires thorough knowledge of a parameter characteristic of the present Raman gain such as the on-off Raman gain. It would however be equally possible to describe the Raman gain by any other suitable parameter.

The basic principle of the present invention is to make use of amplified spontaneous emission (ASE) that occurs in reverse direction as compared to the pump light. ASE occurs in the fiber in presence of the pump signal even without a data signal and is due to Raman spontaneous scattering as opposed to Raman stimulated scattering that occurs only when a signal traverses through the fiber. ASE thus appears at the wavelength of the Stokes line. In presence of a data signal, ASE is an optical noise that perturbs the data detection. The aim of the invention is to predict the pump power that will be necessary to perform the gain planned on future data signals with the specific fiber and local losses that are encountered in the particular installation. The invention thus provides a method for characterization of the Raman gain efficiency in the absence of a data signal since it may not be possible to light on a data signals at the time when the amplifier is installed.

The graphs in figures 2a to 2d show the noise figure as a function of the Raman on/off gain and thus as a function of the pump power. The four graphs show curves for four different optical fibers having different attenuation and Raman efficiency and for different fiber lengths. In particular, figure 2a shows a graph for the following parameters:

signal attenuation = 0,21 dB/km,
pump attenuation = 0,25 dB/km, and
Raman efficiency = 0,4 $W^{-1}km^{-1}$.

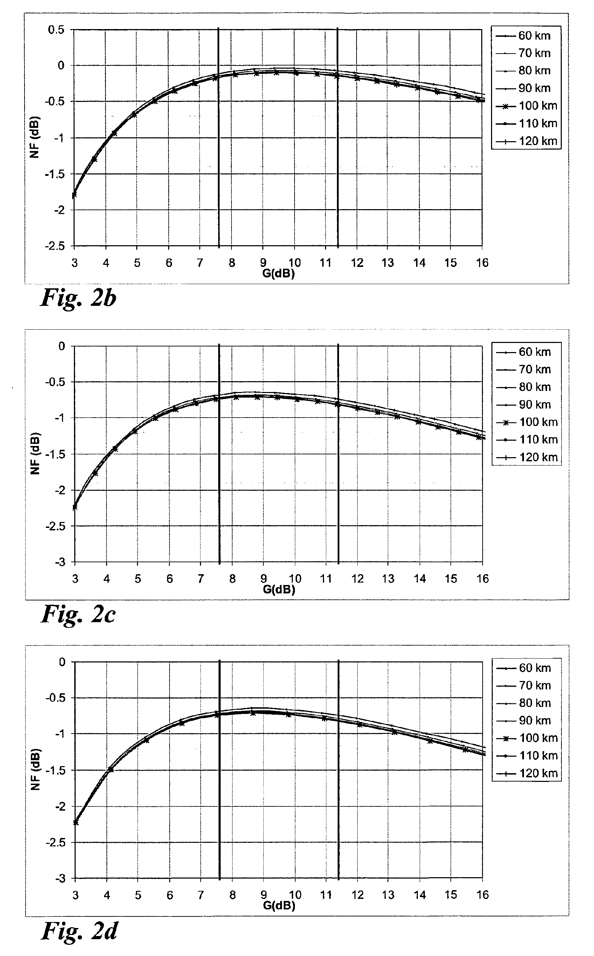

The graph is figure 2b is taken for a fiber with the parameters:

signal attenuation = 0,20 dB/km,
pump attenuation = 0,35 dB/km, and
Raman efficiency = 0,4 $W^{-1}km^{-1}$.

Figure 2c shows a graph of a fiber with the parameters:

signal attenuation = 0,25 dB/km,
pump attenuation = 0,35 dB/km, and
Raman efficiency = 0,4 $W^{-1}km^{-1}$.

And finally, figure 2d shows a graph for a fiber with these parameters:

signal attenuation = 0,25 dB/km,
pump attenuation = 0,35 dB/km, and
Raman efficiency = 0.7 $W^{-1}km^{-1}$.

We found that the noise figure is almost constant with the pump power In a range of the on/off gain of about 9,5 dB whatever the Raman efficiency of the fiber, the length of the link fiber (from 60 to 120km), the attenuation at signal wavelength and the attenuation at pump wavelength is. NF is in this context the noise figure due to ASE, only. It is defines in this context as:

$$NF_{dB} = P_{ASEdBm} - G_{dB} - 10*LOG(h\nu\Delta\nu),$$

where $P_{ASEdBm}$ is the measured ASE power, $G_{dB}$ is the on/off Raman gain expressed in dB and $LOG(h\nu\Delta\nu)$ is a constant term with respect to pump power.

In a small signal regime i.e. when Raman pump depletion is negligible, which is the case for ASE, the following relation for the Raman gain $G_{dB}$ holds true:

$$\frac{\Delta G_{dB}}{G_{dB}} = \frac{\Delta P}{P},$$

where P is the pump power in mW, $\Delta P$ is a variation of (i.e., a difference in) the pump power and $\Delta G_{dB}$ is the corresponding variation of the Raman gain.

In the range where the noise figure is substantially constant with the pump power, any variation of the Raman gain $G_{dB}$ with the pump power P must be directly seen as a variation of the ASE power $P_{ASEdBm}$, i.e.

$$\Delta G_{dB} = \Delta P_{ASEdBm},$$

In this range, we can therefore write:

$$\Delta P_{ASE\ dBm} = G_{dB}\ \frac{\Delta P}{P}.$$

The invention makes use of this range where the noise figure is constant with the Raman gain and where the ASE noise power (linear scale) generated by the pump is therefore proportional to the on/off Raman gain (linear scale) delivered by this pump. According to the invention, a pump light signal is launched into the fiber at a pump power $P_P$ that is in the range for which the noise figure is constant with $P_P$. Then a variation $\Delta P_P$ of $P_P$ is applied. In the preferred embodiment, we apply a variation in the order of 10% to 20%. The ASE power is then measured at the Stokes line, i.e., about 13,2 THz from the pump wavelength, which is the maximum ASE power. We use the band-pass filter BP, which has a filter width of a few nanometers. We thus obtain $\Delta P_{ASEdBm}$. Knowing $\Delta P_P/P_P$ and $\Delta P_{ASEdBm}$, we can determine $G_{dB}$ at the given pump power $P_P$ from the relation given above.

This Raman gain $G_{dB}$ that corresponds to a particular pump power Pp can simply be extrapolated to any other $G_{dB}$ produced by a corresponding pump power $P_P$ (simple proportionality provided that there is no pump depletion taking place due to high power signals traversing the fiber). The gain characteristics of the fiber is thus found.

It has to be noted that the invention characterizes the Raman gain efficiency of a fiber link at a certain pump power that corresponds to about 9,5 dB on/off gain. Later in operation of the system, other values for the pump power will be applied to amplify signals but making use of the proportionality measured earlier.

Coming back to figure 2a to 2d, we found that we must operate for our measurement at a pump power $P_P$ that results in a Raman gain $G_{dB}$ of approximately 9,5 dB. For this first step, i.e. to find $G_{dB}$ of approximately 9,5dB (+/-20%), the data sheets from a preliminary calibration in a laboratory for the actual fiber type are used. As explained before, such preliminary fiber calibration will just provide the required accuracy of +/-20%. Then we apply the method described above. As an alternative, the range where the ASE is proportional to the on/off gain can be determined by scanning the NF curve as in figures 2a-d.

The Raman amplifier as shown in figure 1 has a controller CTR which tunes the power of the Raman pump LD to the required value and measures the ASE power detected by photodiode PD. In an initialization procedure, the amplifier performs the measurements described above, i.e., adjusting the pump power to the range where the noise figure is constant with the Raman gain, varying the pump power and measuring the corresponding variation in the ASE power. The controller then stores the gain characteristic derived from this initialization and uses it during subsequent "normal" operation. The controller thus has a storage for storing the gain value derived from the initialization. While the initialization can in principle be executed manually, it is preferable that the controller is programmed to perform the initialization automatically.

While the invention has been explained in a preferred embodiment, it should be clear to those skilled in the art that the invention is not restricted to the particular details and figures given there. Conversely, those skilled in the art will appreciate that various modifications and substitutions would be possible without departing from the concepts of the invention. For example, those skilled in the art would know, that the Raman pump can have more than one laser diodes or other pump light sources operating at different wavelengths to obtain a smooth and broad gain curve. The invention has been explained as an initialization procedure that is performed upon system installation. Although this is indeed an important application of the invention, it is however not restricted thereto. Conversely, the method according to the invention can be equally applied at any later stage during the lifetime of the system. We have shown in an embodiment with counterpropagating pump signal. The invention can, however, equally be applied with co-propagating pump signal.

**Claims**

1. A method of determining the gain of a Raman amplifier (RA) in a fiber optic communication system comprising an optical fiber (F); the method comprising the steps of

   - launching a pump light signal into said fiber (F);
   - preliminary adjusting the power of said pump light signal to a value that lies in a range where an amplified spontaneous emission noise originating from said pump light signal is substantially proportional to the on/off gain provided by the power of said pump light signal;
   - monitoring the power of said amplified spontaneous emission noise signal;
   - varying the power of said pump light signal;
   - measuring a variation in the power of said amplified spontaneous emission noise signal corresponding to said pump power variation; and
   - determining the gain characteristic of said amplifier from the relative variation in pump power and said measured variation in noise power.

2. A method according to claim 1, wherein said step of determining the gain characteristic follows the relation

$$\Delta P_{ASE\ dBm} = G_{dB}\ \frac{\Delta P}{P}.$$

3. A method according to claim 1, wherein said pump power is varied by an amount that lies in a range between 10% and 20% of the preliminary value.

4. A method according to claim 1, wherein said preliminary value of the power of said pump light signal corresponds to an on-off gain that lies in a range of 9,5 dB +/-20 %.

5. A method according to claim 1, wherein said preliminary adjustment step uses a predefined value obtained for the fiber type actually installed in said fiber optic communication system.

6. A method according to claim 1, wherein said monitoring step includes extracting a portion of the amplified spontaneous emission noise from said fiber and filtering said extracted noise portion using a band-pass filter.

7. A method according to claim 6, wherein said band-pass filter has its passband at the maximum of Raman scattering occurring at the wavelength of the pump signal.

8. A Raman amplifier connectable to a fiber (F) of a fiber optic communication system, said amplifier comprising

   - a pump light source (LD) for launching a pump light signal into said fiber (F) for amplifying optical signals traversing said fiber by stimulated Raman amplification;
   - a photodiode (PD) arranged for monitoring the power of an amplified spontaneous noise signal occurring due to spontaneous Raman scattering of said pump light signal in said fiber (F); and
   - a controller (CTR) adapted and programmed to preliminary adjust the power of said pump light signal to a value that lies in a range where said amplified spontaneous emission noise is substantially proportional to the on/off gain provided by the power of said pump light signal, to vary the power of said pump light signal, to measure a variation in the power of said amplified spontaneous emission noise signal corresponding to said pump power variation, and to determine the gain characteristic of said amplifier from the relative variation in pump power and said measured variation in noise power

9. A Raman amplifier according to claim 8, comprising a tap coupler (TC) for extracting a portion of the amplified spontaneous emission noise from said fiber and a band-pass filter

10. A method according to claim 9, wherein said band-pass filter has its passband at the maximum of Raman scattering occurring at the wavelength of the pump signal.

**Fig. 1**

**Fig. 2a**

**Fig. 2b**

**Fig. 2c**

**Fig. 2d**

**European Patent Office**

# EUROPEAN SEARCH REPORT

Application Number

EP 03 29 2825

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/090780 A1 (SOBE MASAAKI ET AL) 15 May 2003 (2003-05-15) * paragraphs [0022], [0100], [0102], [0131], [0132]; figures 1,2,6,9 * ----- | 1-10 | G01M11/00 H01S3/30 H04B10/08 |
| A | KOCH F ET AL: "Broadband Raman gain characterisation in various optical fibres" ELECTRONICS LETTERS, IEE STEVENAGE, GB, vol. 37, no. 24, 22 November 2001 (2001-11-22), pages 1437-1439, XP006017587 ISSN: 0013-5194 * the whole document * ----- | 1-10 | |
| A | EP 1 248 389 A (NIPPON ELECTRIC CO) 9 October 2002 (2002-10-09) * paragraphs [0006] - [0015], [0027]; figure 3 * ----- | 1-10 | |
| A | US 6 452 716 B1 (PARK DAVID W ET AL) 17 September 2002 (2002-09-17) * column 2, line 33 - line 40; figures 2,3 * * claims 1,2,13 * ----- | 1-10 | TECHNICAL FIELDS SEARCHED (Int.Cl.7) G01M H01S H04B |
| A | EP 1 284 528 A (NORTEL NETWORKS) 19 February 2003 (2003-02-19) * claims 1,8; figure 8 * ----- | 1-10 | |

The present search report has been drawn up for all claims

| Place of search | Date of completion of the search | Examiner |
|---|---|---|
| The Hague | 16 February 2005 | Debesset, S |

EPO FORM 1503 03.82 (P04C01)

**ANNEX TO THE EUROPEAN SEARCH REPORT
ON EUROPEAN PATENT APPLICATION NO.**                    EP 03 29 2825

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2005

| Patent document cited in search report | | Publication date | Patent family member(s) | | Publication date |
|---|---|---|---|---|---|
| US 2003090780 | A1 | 15-05-2003 | JP | 3578343 B2 | 20-10-2004 |
| | | | JP | 2003139656 A | 14-05-2003 |
| | | | CN | 1416229 A | 07-05-2003 |
| EP 1248389 | A | 09-10-2002 | JP | 3587176 B2 | 10-11-2004 |
| | | | JP | 2002296145 A | 09-10-2002 |
| | | | CA | 2379434 A1 | 02-10-2002 |
| | | | CN | 1379279 A | 13-11-2002 |
| | | | EP | 1248389 A2 | 09-10-2002 |
| | | | US | 2002140927 A1 | 03-10-2002 |
| | | | US | 2004160664 A1 | 19-08-2004 |
| US 6452716 | B1 | 17-09-2002 | WO | 0230016 A2 | 11-04-2002 |
| | | | CA | 2421711 A1 | 11-04-2002 |
| | | | EP | 1325573 A2 | 09-07-2003 |
| | | | JP | 2004510395 T | 02-04-2004 |
| EP 1284528 | A | 19-02-2003 | US | 2003123133 A1 | 03-07-2003 |
| | | | CA | 2394585 A1 | 25-01-2003 |
| | | | EP | 1284528 A2 | 19-02-2003 |

EPO FORM P0459

For more details about this annex : see Official Journal of the European Patent Office, No. 12/82